# EUROPEAN PATENT APPLICATION

(11) **EP 4 509 896 A1**
(43) Date of publication of application: **19.02.2025**
(21) Application number: 23787369.0
(22) Date of filing: 17.01.2023
(51) Int. Cl.: G02B 7/04, G03B 13/32, G02B 15/14

(54) **CAMERA MODULE**

(30) Priority: 13.04.2022 CN 202210389786
(71) Applicant: Huizhou TCL Mobile Communication Co., Ltd, Guangdong 516006 (CN)
(72) Inventor: WANG, Xing, Huizhou, Guangdong 516006 (CN); DENG, Yanling, Huizhou, Guangdong 516006 (CN); GAO, Zhicong, Huizhou, Guangdong 516006 (CN); NIE, Bingbing, Huizhou, Guangdong 516006 (CN); ZHANG, Xiaohui, Huizhou, Guangdong 516006 (CN); LUO, Liang, Huizhou, Guangdong 516006 (CN)
(74) Representative: Murgitroyd & Company
(86) International application number: PCT/CN2023/072660
(87) International publication number: WO 2023/197721

(57) **Abstract**

A camera module, comprising a first camera device, wherein the first camera device comprises a limiting block, a limiting piece and a first lens assembly; the first camera device is provided with a first accommodation space; the limiting block is fixed on an inner side wall of the first accommodation space, and the limiting block comprises a first long frame and a second long frame; the limiting piece is fixed to an outer side surface of the first lens assembly; the first lens assembly can drive the limiting piece to move in a first direction; and the first long frame and the second long frame can limit a motion stroke of the limiting piece.

## Description

### TECHNICAL FIELD

The present application relates to the field of camera technology, and in particular to a camera module.

### BACKGROUND TECHNOLOGY

With the development of science and technology, more and more devices have camera functions. The camera function of the device can be configured to record pictures of people, scenes, etc.

A module that realizes the camera function usually has a zoom function. Through camera zoom, a focal length can be changed within a certain range to obtain different widths of the field of view, so as to obtain shooting pictures with different effects.

### SUMMARY OF INVENTION

### Technical Problem

At present, in a zoom setting, a camera module only drives a position of a zoom lens through a driving device to achieve zooming. The camera module is not provided with a structure to limit initial and final positions of the zoom lens, so that during a driving process, the driving device cannot accurately locate the initial and final positions of the zoom lens.

### Technical Solutions

Embodiment of the present application provide a camera module with a limit structure to achieve accurate positioning of initial and final positions of a zoom lens.

An embodiment of the present application provides a camera module, the camera module includes a first camera device, the first camera device includes a position-limiting block, a position-limiting plate, and a first lens assembly, the first camera device is provided with a first accommodation space, the position-limiting block is fixed on an inner wall of the first accommodation space, the position-limiting block includes a first long side and a second long side which are arranged in parallel, the position-limiting plate is fixed to an outer side surface of the first lens assembly, a portion of the position-limiting plate protrudes from the first lens assembly and is disposed between the first long side and the second long side, the first lens assembly drives the position-limiting plate to move along a first direction, and the first long side and the second long side limit a movement range of the position-limiting plate.

### Beneficial Effects

In the camera module provided in the embodiments of the present application, the position-limiting plate is provided on the outer side surface of the first lens assembly, and the position-limiting block is provided at a position opposite to the position-limiting plate. The position-limiting plate is partially disposed within the first long side and the second long side of the position-limiting block. Thus, when adjusting focal lengths at both ends, the first lens assembly drives the position-limiting plate to move. When moving to both ends, the movement range of the position-limiting plate is limited by the first long side and the second long side, thereby limiting a travel of both ends of the first lens assembly, making an adjustment of the focal lengths at both ends more precise.

### BRIEF DESCRIPTION OF THE DRAWINGS

In order to more clearly illustrate technical solutions in the embodiments of the present application, accompanying drawings that will be described in the embodiments are briefly introduced. It is obvious that the drawings described below are merely some embodiments of the present application, those skilled in the art can obtain other drawings according to these drawings without creative efforts.
FIG. 1 is a cross-sectional view of a camera module in an embodiment of the present application.
FIG. 2 is a schematic diagram of a partial structure of a camera module in an embodiment of the present application.
FIG. 3 is a schematic diagram of another partial structure of a camera module in an embodiment of the present application.

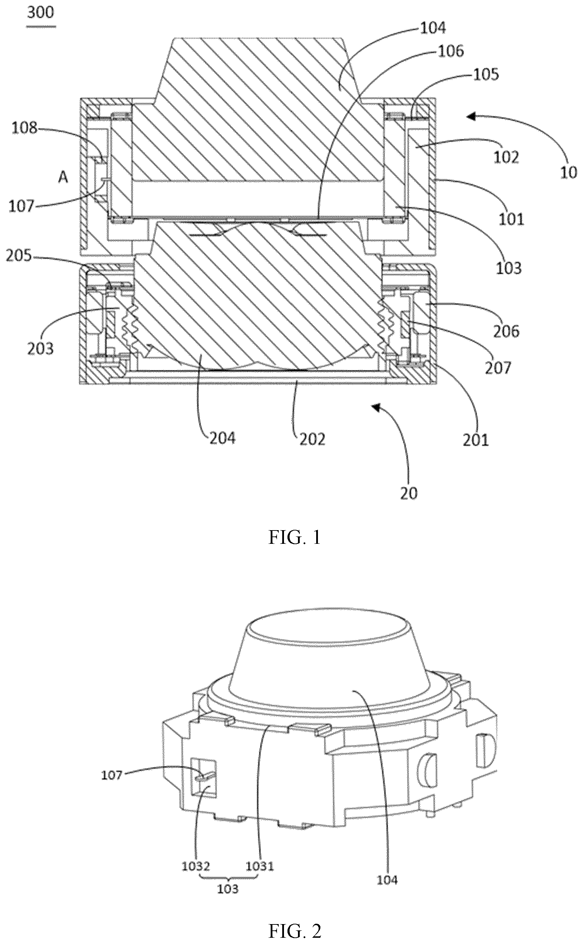

Please refer to FIG. 1 to FIG. 3, 300 is a camera module, 10 is a first camera device, 20 is a second camera device, 101 is a first housing, 102 is a first base, 103 is a first lens barrel, 104 is a first lens, 105 is a first retaining spring, 106 is a second retaining spring, 107 is a position-limiting plate, 108 is a position-limiting block, 201 is a second housing, 202 is a second base, 203 is a second lens barrel, 204 is a second lens, 205 is an elastic member, 206 is a second driving coil, 207 is a second magnetic element, 1031 is a first assembly hole, 1032 is an avoidance slot, 2031 is a second assembly hole, and 2032 is a matching slot.

### DETAILED DESCRIPTION OF THE PREFERRED EMBODIMENTS

The following clearly and completely describes the technical solutions in the embodiments of the present application with reference to the accompanying drawings in the embodiments of the present application. Apparently, the described embodiments are merely some of the embodiments of the present application rather than all of the embodiments. All other embodiments obtained by a person of ordinary skill in the art based on the embodiments of the present application without creative efforts shall fall within the protection scope of the present application.

In the description of the present application, it should be noted that, unless otherwise explicitly specified or defined, terms such as "installation", "couple", and "connect" should be understood in a broad sense. For example, the connection may be a fixed connection, a detachable connection, or an integral connection; may be a mechanical connection, an electrical connection, or mutual communication; or may be a direct connection, an indirect connection through an intermediate, internal communication between two elements, or an interaction relationship between two elements. An element, when referred to as being "fixed" to another element, may be directly fixed or connected to the another element or via an intermediate element. For those skilled in the art, the specific meanings of the above terms in this application can be understood according to specific circumstances.

The following disclosure provides many different embodiments or examples for implementing different structures of the present disclosure. To simplify the present disclosure, components and arrangements in specific examples are described below. Alternatively, they are merely examples and are not intended to limit the present disclosure. Further, reference numerals and/or reference letters may be repeated in the various examples in the present disclosure for simplicity and clarity, and do not indicate a relationship between the various examples and/or arrangements discussed. In addition, the present disclosure provides examples of various specific processes and materials, but one of ordinary skill in the art may readily know use of other processes and/or other materials.

Please refer to FIG. 1, which is a cross-sectional view of a camera module in an embodiment of the present application. The camera module 300 can be used in an electronic device with a shooting function, and includes a first camera device 10 and a second camera device 20. The first camera device 10 and the second camera device 20 can be connected by means of adhesive. A thickness of an adhesive layer is set according to focal lengths at both ends.

In the embodiment of the present application, the first camera device 10 and the second camera device 20 are both configured to adjust a focal length. The first camera device 10 is configured to accurately adjust the focal lengths at both ends. The focal lengths at both ends are focal lengths at initial and final positions.

The first camera device 10 includes a first housing 101, a first base 102, a first lens barrel 103, a first lens 104, a first retaining spring 105, a second retaining spring 106, a position-limiting plate 107, and a position-limiting block 108.

The first housing 101 is a hollow structure, and is disposed outside the first camera device 10. The first base 102 and the first housing 101 can be considered to be jointly enclosed as a first accommodation space (not shown). The first accommodation space is non-enclosed, and is configured to install and accommodate other structural components.

Alternatively, the first housing 101 forms surrounding walls and a top wall with an opening of the first accommodation space. The first base 102 is partially disposed in the first accommodation space and partially forms a bottom wall of the first accommodation space with an opening.

The first lens barrel 103 is disposed in the first accommodation space. Moreover, the first lens barrel 103 can move in the first accommodation space. Specifically, the first lens barrel 103 can move along a first direction. That is, the first lens barrel 103 can move in the first accommodation space toward the second camera device 20 or away from the second camera device 20.

Please refer to FIG. 2, which is a schematic diagram of a partial structure of a camera module in an embodiment of the present application. Furthermore, the first lens barrel 103 is provided with a first assembly hole 1031 and an avoidance slot 1032.

The first assembly hole 1031 extends through the first lens barrel 103 and is a through hole for assembling with the first lens 104 to fix the first lens barrel 103 and the first lens 104 so that the first lens barrel 103 and the first lens 104 are used as one component. When the first lens barrel 103 moves, the first lens 104 is driven to move together.

One way of assembling the first lens barrel 103 and the first lens 104 is by snapping. A slot may be provided on an inner wall of the first assembly hole 1031. When the first lens barrel 103 and the first lens 104 are assembled, an edge of the first lens 104 and the slot are assembled to connect and fix the first lens barrel 103 and the first lens 104, such that the first lens 104 is partially disposed in the first assembly hole 1031 and partially protrudes from the first assembly hole 1031.

Another way to assemble the first lens barrel 103 and the first lens 104 is screw connection. A thread may be provided on an inner wall of the first assembly hole 1031, and a matching thread may also be provided on the first lens 104. When the first lens barrel 103 and the first lens 104 are assembled, the thread on the first lens 104 cooperates with the thread in the first assembly hole 1031 to connect and fix the first lens barrel 103 and the first lens 104, so that the first lens 104 is partially disposed in the first assembly hole 1031 and partially protrudes from the first assembly hole 1031. This facilitates a replacement of the first lens 104.

The first lens 104 is configured to obtain shooting images. After being assembled with the first lens barrel 103, the first lens 104 is partially disposed in the first accommodation space and partially protrudes from the first accommodation space. The first lens 104 is driven to move by the first lens barrel 103. That is, the focal length is adjusted by the first lens barrel 103 to obtain shooting images with different effects.

An avoidance slot 1032 is disposed on an outer side surface of the first lens barrel 103 and is rectangular in shape. In addition, the avoidance slot 1032 and the position-limiting plate 107 are disposed at opposite positions.

The position-limiting plate 107 is configured to limit the initial and final movement positions of the first lens barrel 103, that is, to limit the focal lengths at both ends of the first lens barrel 103. The position-limiting plate 107 is an important component for achieving accurate positioning of the focal lengths at both ends. The position-limiting plate 107 is disposed in the avoidance slot 1032. Moreover, the position-limiting plate 107 is disposed in the first accommodation space. For example, the position-limiting plate 107 may be partially disposed in the avoidance slot 1032.

In the embodiment of the present application, the position-limiting plate 107 and the first lens barrel 103 may be integrated, and the position-limiting plate 107 may be a metal sheet with high precision, certain strength, and hardness.

In the embodiment of the present application, the first lens barrel 103 and the first lens 104 may be configured as a first lens assembly.

The first retaining spring 105 and the second retaining spring 106 are both disposed in the first accommodation space and are configured to limit the first lens barrel 103. At the same time, when adjusting the initial and final focal lengths at both ends, the first retaining spring 105 and the second retaining spring 106 can exert a spring force opposite to the first movement direction due to deformation to limit the movement and protect the position-limiting plate 107.

In the embodiment of the present application, one first retaining spring 105 and one second retaining spring 106 are provided. The first retaining spring 105 and the second retaining spring 106 are both fixed in the first accommodation space. The position limitation can be achieved by clamping the inner wall of the first housing 101, or by other structural members.

The first retaining spring 105 is disposed at a top of the first lens barrel 103, and the second retaining spring 106 is disposed at a bottom of the first lens barrel 103. For example, the first retaining spring 105 is disposed above the first lens barrel 103, and the second retaining spring 106 is disposed below the first lens barrel 103.

When the first lens barrel 103 drives the first lens 104 to move to an initial position at a bottom, the first lens barrel 103 squeezes the second retaining spring 106 disposed below because the position of the second retaining spring 106 is fixed. The second retaining spring 106 undergoes elastic deformation under the squeezing force, generating an upward spring force, which restricts the movement of the first lens barrel 103.

Accordingly, when the first lens barrel 103 drives the first lens 104 to move to an upper final position, the first lens barrel 103 squeezes the first retaining spring 105 disposed above because the position of the first retaining spring 105 is fixed. The first retaining spring 105 undergoes elastic deformation under the squeezing force, generating a downward spring force, which restricts the movement of the first lens barrel 103.

The position-limiting block 108 is disposed in the first accommodation space and is fixed by the first base 102. The position-limiting block 108 is configured to limit the movement position of the position-limiting plate 107. That is, the position-limiting block 108 is configured to limit the movement range of the position-limiting plate 107 to achieve accurate positioning of two focal lengths.

In the embodiment of the present application, the position-limiting block 108 is connected and fixed to an inner wall of the first base 102, and is a rectangular frame structure with an opening at one end. The opening is provided on a short side of one side. One end of the position-limiting plate 107 is disposed between two long sides of the position-limiting block 108. A distance between the two long sides of the position-limiting block 108 is an adjustment range of the focal length of the first camera device 10.

Alternatively, the position-limiting block 108 may include a short side, a first long side, and a second long side. Cross-sections of the short side, the first long side, and the second long side are all rectangular. One end of the first long side and one end of the second long side are respectively connected to two ends of the short side, so that the position-limiting block 108 has a rectangular frame structure with one short side less.

The first long side is arranged to be disposed near the first retaining spring 105, and the second long side is arranged to be disposed near the second retaining spring 106, and a portion of the position-limiting plate 107 is disposed between the first long side and the second long side. When the first lens barrel 103 drives the first lens 104 and the position-limiting plate 107 to move upward, and the position-limiting plate 107 moves to a position in contact with an inner wall of the first long side, it is equivalent to moving to a final position. At this time, the focal length of the first camera device 10 is the largest. Since the position of the first retaining spring 105 is fixed, the first lens barrel 103 squeezes the first retaining spring 105. The first retaining spring 105 undergoes elastic deformation under the action of the squeezing force, generates a downward spring force, and has a limiting effect on the movement, thereby preventing the position-limiting plate 107 from being deformed and damaged under external force.

The first long side is arranged to be disposed near the first retaining spring 105, and the second long side is arranged to be disposed near the second retaining spring 106, and a portion of the position-limiting plate 107 is disposed between the first long side and the second long side. When the first lens barrel 103 drives the first lens 104 and the position-limiting plate 107 to move downward, and the position-limiting plate 107 moves to a position in contact with an inner wall of the second long side, it is equivalent to moving to an initial position. At this time, the focal length of the first camera device 10 is minimum. Since the position of the second retaining spring 106 is fixed, the first lens barrel 103 squeezes the second retaining spring 106. The second retaining spring 106 undergoes elastic deformation under the action of the squeezing force, generates an upward spring force, and has a limiting effect on the movement, thereby preventing the position-limiting plate 107 from being deformed and damaged under external force.

It should be noted that the first camera device 10 also includes a first driving coil (not shown) and a first magnetic element (not shown). The first driving coil and the first magnetic element are both disposed in the first accommodation space. The first driving coil is fixed on the inner wall of the first housing 101. The first magnetic element is fixed on the outer side surface of the first lens barrel 103. The first lens barrel 103 is driven to move by the first driving coil and the first magnetic element. For example, the first driving coil and the first magnetic element can drive the first lens barrel 103 to move along the first direction.

The second camera device 20 includes a second housing 201, a second base 202, a second lens barrel 203, a second lens 204, an elastic member 205, a second driving coil 206, and a second magnetic element 207.

The second housing 201 is a hollow structure, disposed outside the second camera device 20. The second base 202 and the second housing 201 can be considered to be jointly enclosed as a second accommodation space (not shown). The second accommodation space is non-enclosed and is configured to install and accommodate other structural components.

In an embodiment of the present application, the first accommodation space is connected to the second accommodation space. The second camera device 20 partially protrudes from the second accommodation space and is disposed in the first accommodation space.

Alternatively, the second housing 201 forms surrounding walls and a top wall having an opening of the second accommodation space, and the second base 202 forms a bottom wall of the second accommodation space having an opening.

The second lens barrel 203 is disposed in the second accommodation space, and the second lens barrel 203 can move in the second accommodation space. Specifically, the second lens barrel 203 can move along the first direction. That is, the second lens barrel 203 can move in the second accommodation space toward the first camera device 10 or away from the first camera device 10.

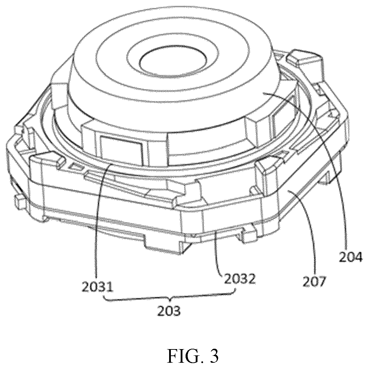

Please refer to FIG. 3, which is a schematic diagram of another partial structure of a camera module in an embodiment of the present application. Furthermore, the second lens barrel 203 is provided with a second assembly hole 2031 and a matching slot 2032.

The second assembly hole 2031 extends through the second lens barrel 203 and is a through hole for assembling with the second lens 204 to fix the second lens barrel 203 and the second lens 204 so that the second lens barrel 203 and the second lens 204 act as one component and drive the second lens 204 to move together when the second lens barrel 203 moves.

A first thread is disposed on an inner wall of the second assembly hole 2031. An matching second thread is disposed on an outer wall of the second lens 204. During assembly, the second thread on the second lens 204 cooperates with the first thread in the second assembly hole 2031 to connect and fix the second lens 204 and the second lens barrel 203. After assembly, the second lens 204 is partially disposed in the second assembly hole 2031 and partially protrudes from the second assembly hole 2031.

The second lens 204 is configured to obtain shooting images. After being assembled with the second lens barrel 203, the second lens 204 is partially disposed in the second accommodation space, and partially protrudes from the second accommodation space and is disposed in the first accommodation space. The second lens 204 is driven to move by the second lens barrel 203. That is, the focal length is adjusted through the first lens barrel 203 to obtain shooting images with different effects.

Alternatively, by adjusting the focal lengths of the first lens 104 and the second lens 204, the first lens 104 and the second lens 204 can jointly obtain shooting images with different effects.

The matching slot 2032 is disposed on an outer side surface of the second lens barrel 204 for assembly with the second magnetic element 207.

The second driving coil 206 and the second magnetic element 207 are both disposed in the second accommodation space. The second driving coil 206 is fixed on an inner wall of the second housing 201. The second magnetic element 207 is installed in the matching slot 2032. The second driving coil 206 and the second magnetic element 207 are configured to jointly drive the second lens barrel 203 to move.

In the embodiment of the present application, the second lens barrel 203 and the second lens 204 may be configured as a second lens assembly.

The elastic member 205 is disposed in the second accommodation space, and is configured to limit the second lens barrel 203.

In an embodiment of the present application, two elastic members 205 are provided. The two elastic members 205 can be respectively provided as a first elastic member and a second elastic member. The first elastic member and the second elastic member are both fixed in the second accommodation space. Position limitation can be achieved by engaging with the inner wall of the second housing 201, or by other structural members.

The first elastic member is disposed at a top of the second lens barrel 203, and the second elastic member is disposed at a bottom of the second lens barrel 203. Alternatively, the first elastic member is disposed above the second lens barrel 203, and the second elastic member is disposed below the second lens barrel 203.

When the second driving coil 206 and the second magnetic element 207 drive the second lens barrel 203 to drive the second lens 204 to move downward to the bottom, the second lens barrel 203 squeezes the second elastic member disposed below because the position of the second elastic member is fixed. The second elastic member undergoes elastic deformation under the squeezing force and generates an upward spring force to limit the movement.

When the second driving coil 206 and the second magnetic element 207 drive the second lens barrel 203 to drive the second lens 204 to move upward to the top, the second lens barrel 203 squeezes the first elastic member disposed above because the position of the first elastic member is fixed. The first elastic member undergoes elastic deformation under the squeezing force and generates a downward spring force to limit the movement.

An embodiment of the present application provides a camera module, which includes a first camera device 10. The first camera device 10 includes a position-limiting block 108, a position-limiting plate 107, and a first lens 104 assembly. The first camera device 10 is provided with a first accommodation space. The position-limiting block 108 is fixed on an inner wall of the first accommodation space. The position-limiting block 108 includes a first long side and a second long side arranged in parallel. The position-limiting plate 107 is fixed to an outer side surface of the first lens 104 assembly. The position-limiting plate 107 partially protrudes from the first lens 104 assembly and is disposed between the first long side and the second long side. The first lens 104 assembly can drive the position-limiting plate 107 to move along a first direction. The first long side and the second long side can limit a movement range of the position-limiting plate 107.

The first lens 104 assembly includes a first lens barrel 103. The first lens barrel 103 is disposed in the first accommodation space. An avoidance slot 20321032 is provided on an outer side surface of the first lens barrel 103. The position-limiting plate 107 is partially disposed in the avoidance slot 20321032 and partially protrudes from the avoidance slot 20321032 and is disposed between the first long side and the second long side.

The first lens 104 assembly further includes a first lens 104. A first assembly hole 1031 is further provided on the first lens barrel 103. The first assembly hole 1031 extends from a top of the first lens barrel 103 to a bottom of the first lens barrel 103. A portion of the first lens 104 is disposed in the first assembly hole 1031. A portion of the first lens 104 protrudes from the first assembly hole 1031 and is disposed outside the first accommodation space.

A slot 2032 is disposed on an inner wall of the first assembly hole 1031. An edge of the first lens 104 is assembled with the slot 2032 to connect and fix the first lens barrel 103 and the first lens 104.

The inner wall of the first assembly hole 1031 is provided with a thread, and the first lens 104 is correspondingly provided with a thread. The thread on the first lens 104 cooperates with the thread in the first assembly hole 1031 to connect and fix the first lens barrel 103 and the first lens 104.

The first camera device 10 further includes a first retaining spring 105 and a second retaining spring 106. The first retaining spring 105 and the second retaining spring 106 are both fixed in the first accommodation space. The first retaining spring 105 is disposed above the first lens barrel 103. The second retaining spring 106 is disposed below the first lens barrel 103.

When the first lens barrel 103 drives the first lens 104 to move to an initial position at a bottom, the first lens barrel 103 squeezes the second retaining spring 106. Under the squeezing force, the second retaining spring 106 undergoes elastic deformation to generate a spring force. The spring force limits the movement of the first lens barrel 103.

When the first lens barrel 103 drives the first lens 104 to move to an upper final position, the first lens barrel 103 squeezes the first retaining spring 105. The first retaining spring 105 is elastically deformed under the squeezing force to generate a spring force. The spring force limits the movement of the first lens barrel 103.

The first camera device 10 further includes a first driving coil and a first magnetic element. The first driving coil is fixed on the inner wall of the first accommodation space. The first magnetic element is fixed on the outer side surface of the first lens barrel 103. The first driving coil and the first magnetic element can drive the first lens barrel 103 to move along the first direction.

The first camera device 10 further includes a first retaining spring 105, a second retaining spring 106, a first driving coil, and a first magnetic element. The first retaining spring 105 and the second retaining spring 106 are both fixed in the first accommodation space. The first retaining spring 105 is disposed above the first lens barrel 103. The second retaining spring 106 is disposed below the first lens barrel 103. The first driving coil is fixed on the inner wall of the first accommodation space. The first magnetic element is fixed on the outer side surface of the first lens barrel 103. The first driving coil and the first magnetic element can drive the first lens barrel 103 to move along the first direction.

The position-limiting block 108 also includes a short side. One end of the first long side and one end of the second long side are respectively connected to two ends of the short side, so that the position-limiting block 108 has a rectangular frame structure with one short side less.

The first camera device 10 includes a first housing 101 and a first base 102. The first housing 101 is a hollow structure. The first base 102 and the first housing 101 are enclosed together to form the first accommodation space.

The camera module 300 further includes a second camera device 20. The second camera device 20 includes a second lens barrel 203 and a second lens 204. The second camera device 20 is provided with a second accommodation space. The second accommodation space is connected to the first accommodation space. The second lens barrel 203 is disposed in the second accommodation space. The second lens 204 is assembled with the second lens barrel 203. The second lens 204 is partially disposed in the second accommodation space and partially protrudes from the second accommodation space and is disposed in the first accommodation space. The second lens 204 is disposed below the first lens 104 assembly.

The first camera device 10 and the second camera device 20 are connected by means of adhesive.

The second lens barrel 203 is provided with a second assembly hole 2031. The second assembly hole 2031 extends from a top of the second lens barrel 203 to a bottom of the second lens barrel 203. A first thread is provided in the second assembly hole 2031. A second thread is provided on the outer side surface of the second lens 204. The first thread cooperates with the second thread.

The second camera device 20 further includes a second magnetic element 207. A matching slot 2032 is provided on the outer side surface of the second lens barrel 203. The second magnetic element 207 is installed in the matching slot 2032.

The second camera device 20 further includes a second driving coil 205. The second driving coil 205 is fixed on an inner wall of the second accommodation space. The second driving coil 205 and the second magnetic element 207 can drive the second lens barrel 203 to move along the first direction.

The second camera device 20 further includes a first elastic member 205. The first elastic member 205 is fixed in the second accommodation space and is disposed above the second lens barrel 203.

The second camera device 20 further includes a second elastic body. The second elastic body is fixed in the second accommodation space and is disposed below the second lens barrel 203.

The second camera device 20 includes a second housing 201 and a second base 202. The second housing 201 is a hollow structure. The second base 202 and the second housing 201 are enclosed together to form the second accommodation space.

The embodiment of the present application provides the camera module 300, including the first camera device 10 and the second camera device 20 connected to each other. The first camera device 10 and the second camera device 20 are both configured to adjust the focal length. The first camera device 10 achieves precise adjustment of the focal lengths at both ends by setting the position-limiting plate 107 and the position-limiting block 108.

The technical features in the foregoing embodiments may be randomly combined. For simplicity of description, all possible combinations of the technical features in the foregoing embodiments are not described. However, it should be considered that these combinations of technical features fall within the scope recorded in the specification provided that these combinations of technical features do not have any conflict.

The foregoing embodiments only describe several implementations of the present application, and their description is specific and detailed, but cannot therefore be understood as a limitation to the patent scope of the present application. It should be noted that a person of ordinary skill in the art may further make variations and improvements without departing from the conception of the present application, and these all fall within the protection scope of the present application. Therefore, the patent protection scope of the present application should be subject to the appended claims.

## Claims

1. A camera module, comprising a first camera device, wherein the first camera device comprises a position-limiting block, a position-limiting plate, and a first lens assembly, the first camera device is provided with a first accommodation space, the position-limiting block is fixed on an inner wall of the first accommodation space, the position-limiting block comprises a first long side and a second long side which are arranged in parallel, the position-limiting plate is fixed to an outer side surface of the first lens assembly, a portion of the position-limiting plate protrudes from the first lens assembly and is disposed between the first long side and the second long side, the first lens assembly drives the position-limiting plate to move along a first direction, and the first long side and the second long side limit a movement range of the position-limiting plate.

2. The camera module according to claim 1, wherein the first lens assembly comprises a first lens barrel, the first lens barrel is disposed in the first accommodation space, an avoidance slot is disposed on an outer side surface of the first lens barrel, and the position-limiting plate is partially disposed in the avoidance slot and partially protrudes from the avoidance slot and is disposed between the first long side and the second long side.

3. The camera module according to claim 2, wherein the avoidance slot is rectangular.

4. The camera module according to claim 2, wherein the first lens assembly further comprises a first lens, the first lens barrel is further provided with a first assembly hole, the first assembly hole extends from a top of the first lens barrel to a bottom of the first lens barrel, and the first lens is partially disposed in the first assembly hole and partially protrudes from the first assembly hole and is disposed outside the first accommodation space.

5. The camera module according to claim 4, wherein an inner wall of the first assembly hole is provided with a slot, and an edge of the first lens is assembled with the slot to connect and fix the first lens barrel and the first lens.

6. The camera module according to claim 4, wherein an inner wall of the first assembly hole is provided with a thread, the first lens is correspondingly provided with another thread, and the thread on the first lens cooperates with the thread in the first assembly hole to connect and fix the first lens barrel and the first lens.

7. The camera module according to claim 2, wherein the first camera device further comprises a first retaining spring and a second retaining spring, both the first retaining spring and the second retaining spring are fixed in the first accommodation space, the first retaining spring is disposed above the first lens barrel, and the second retaining spring is disposed below the first lens barrel.

8. The camera module according to claim 2, wherein the first camera device further comprises a first driving coil and a first magnetic element, the first driving coil is fixed on the inner wall of the first accommodation space, the first magnetic element is fixed on the outer side surface of the first lens barrel, and the first driving coil and the first magnetic element drive the first lens barrel to move along the first direction.

9. The camera module according to claim 2, wherein the first camera device further comprises a first retaining spring, a second retaining spring, a first driving coil, and a first magnetic element, the first retaining spring and the second retaining spring are both fixed in the first accommodation space, the first retaining spring is disposed above the first lens barrel, and the second retaining spring is disposed below the first lens barrel; the first driving coil is fixed on the inner wall of the first accommodation space, the first magnetic element is fixed on the outer side surface of the first lens barrel, and the first driving coil and the first magnetic element drive the first lens barrel to move along the first direction.

10. The camera module according to claim 2, wherein the position-limiting plate and the first lens barrel are integrated.

11. The camera module according to claim 1, wherein the position-limiting block further comprises a short side, and one end of the first long side and one end of the second long side are respectively connected to two ends of the short side, so that the position-limiting block is a rectangular frame structure with one short side less.

12. The camera module according to claim 1, wherein the first camera device comprises a first housing and a first base, the first housing is a hollow structure, and the first base and the first housing are enclosed together to form the first accommodation space.

13. The camera module according to claim 1, wherein the camera module further comprises a second camera device, the second camera device comprises a second lens barrel and a second lens, the second camera device is provided with a second accommodation space, the second accommodation space is connected to the first accommodation space, the second lens barrel is disposed in the second accommodation space, the second lens and the second lens barrel are assembled, the second lens is partially disposed in the second accommodation space and partially protrudes from the second accommodation space and is disposed in the first accommodation space, and the second lens is disposed below the first lens assembly.

14. The camera module according to claim 13, wherein the first camera device and the second camera device are connected by means of adhesive.

15. The camera module according to claim 13, wherein the second lens barrel is provided with a second assembly hole, the second assembly hole extends from a top of the second lens barrel to a bottom of the second lens barrel, the second assembly hole is provided with a first thread, an outer side surface of the second lens is provided with a second thread, and the first thread and the second thread cooperate with each other.

16. The camera module according to claim 13, wherein the second camera device further comprises a second magnetic element, an outer side surface of the second lens barrel is provided with a matching slot, and the second magnetic element is installed in the matching slot.

17. The camera module according to claim 16, wherein the second camera device further comprises a second driving coil, the second driving coil is fixed on an inner wall of the second accommodation space, and the second driving coil and the second magnetic element drive the second lens barrel to move along the first direction.

18. The camera module according to claim 13, wherein the second camera device further comprises a first elastic member, the first elastic member is fixed in the second accommodation space, and the first elastic member is disposed above the second lens barrel.

19. The camera module according to claim 13, wherein the second camera device further comprises a second elastic body, the second elastic body is fixed in the second accommodation space, and the second elastic body is disposed below the second lens barrel.

20. The camera module according to claim 13, wherein the second camera device comprises a second housing and a second base, the second housing is a hollow structure, and the second base and the second housing are enclosed together to form the second accommodation space.
